Europäisches Patentamt

European Patent Office

Office européen des brevets

(11) Veröffentlichungsnummer: 0 380 044
A1

(12) EUROPÄISCHE PATENTANMELDUNG

(21) Anmeldenummer: 90101277.3

(51) Int. Cl.5: G01S 13/90

(22) Anmeldetag: 23.01.90

(30) Priorität: 23.01.89 IT 1915589

(43) Veröffentlichungstag der Anmeldung:
01.08.90 Patentblatt 90/31

(84) Benannte Vertragsstaaten:
AT BE CH DE ES FR GB LI NL SE

(71) Anmelder: ALCATEL N.V.
Strawinskylaan 341 (World Trade Center)
NL-1077 XX Amsterdam(NL)

(72) Erfinder: Armenise, Mario Nicola
Via Giulio Petroni, 129/F
I-70100 Bari(IT)
Erfinder: Pansini, Evangelista
Via Giovanni Panunzio 23
I-700 56 Molfetta(Bari)(IT)
Erfinder: Fioretti, Alberto
Largo Pannonia, 23
I-Roma(IT)

(74) Vertreter: Graf, Georg Hugo, Dipl.-Ing. et al
Standard Elektrik Lorenz AG Patent- und
Lizenzwesen Postfach 30 09 29
D-7000 Stuttgart 30(DE)

(54) Wellenleiterkorrelatorsystem für Echtzeit-Radar-Datenverarbeitung.

(57) Es ist ein Wellenleiterkorrelatorsystem zur Echtzeitverarbeitung von Radardaten beschrieben, der eine Lichtquelle (4), einen Wellenleiter (6), eine Kollimatorlinse (7), einen Braggablenker (8) und ein Gitterfilter (9) enthält, die auf einem gemeinsamen Substrat aus Lithium-Niobat integriert und über eine Transmissionsmaske (3) mit einer CCD-Matrix (2) gekoppelt sind.

FIG1

## Wellenleiterkorrelatorsystem für Echtzeit-Radar-Datenverarbeitung

Die vorliegende Erfindung betrifft ein Wellenleiterkorrelatorsystem für Echtzeit-Radar-Datenverarbeitung.

Zunächst sollen zwei Richtungen im Raum definiert werden, genannt "Entfernungsrichtung" und "Azimuth". Die erste verbindet den Mittelpunkt des von einer Radarantenne ausgeleuchteten Gebiets mit der Radarantenne, die zweite Richtung fällt mit der Flugrichtung eines Flugzeugs zusammen, das die Radarantenne trägt.

Wie bekannt, ist es auf dem Gebiet der Luftbildrekonstruktion von Flugzeugen aus besonders vorteilhaft, Radargeräte zu verwenden, deren Apertur in Echtzeit berechnet werden kann, um genaue Bilder mit hoher Auflösung zu erhalten. Derartige Radargeräte werden als SAR (Synthetic Aperture Radar) bezeichnet.

Der Hauptvorteil eines SAR besteht in der Möglichkeit, bei relativ langen Sendewellenlängen und mit Antennen mit kleinen Abmessungen Luftbilder mit hoher Auflösung zu erzielen.

SAR-Datenverarbeitung wurde in den frühen Fünfziger Jahren experimentell untersucht. Üblicherweise werden am Boden befindliche optische Signalprozessoren verwendet, um SAR-Bilder aus von Flugzeugen oder Satelliten aus gesammelten Daten zu erhalten, die auf einem photographischen Film gespeichert sind. In den letzten Jahren entstand die Forderung, Echtzeitprozessoren an Bord zu haben. Die jüngsten Fortschritte der Mikroelektronik ermöglichten qualitativ hochwertige Bildauswertung mittels sehr flexibler digitaler Rechenanlagen. Jedoch sind diese Anlagen sehr komplex, teuer, unhandlich und haben eine hohe Leistungsaufnahme. Bis heute werden zum größten Teil SAR-Daten in Forschungslaboratorien gesammelt, analysiert und interpretiert, um den Bilderzeugungsmechanismus und seinen Informationsgehalt besser zu verstehen. In diesen Laboratorien ist natürlich eine hochgenaue digitale Verarbeitung erforderlich.

In Zukunft soll ein SAR auch für "Routinebilder" verwendet werden, beispielsweise für die Überwachung des Packeises, der Ozeane oder landwirtschaftlicher Nutzflächen. Für derartige Anwendungen müssen keine digitalen Prozessoren verwendet werden, da sie keine hohe Flexibilität erfordern.

Normalerweise orientiert ein Flugzeug, das mit einer Radaranlage ausgerüstet ist und mit einer konstanten Geschwindigkeit fliegt, seine Antenne senkrecht zur Flugrichtung und ist daher um einen sogenannten "Blickwinkel" gegen die Vertikale gekippt. Die Antenne sendet periodisch elektromagnetische kodierte Impulse aus. Die Kodierung eines gesendeten Impulses besteht aus einer linearen Frequenzmodulation. Die gesendete Wellenform wird teilweise zu dem Flugzeug zurückreflektiert, in dem die Radaranlage installiert ist, und durch die Antenne aufgefangen. Die SAR-Daten werden verarbeitet, um aus den empfangenen Echos das Bild des Bodens zu rekonstruieren, auf den der Radarstrahl gerichtet war. Bei der Verarbeitung aller dieser Echos tritt die Schwierigkeit auf, die Bewegung des Flugzeugs, in dem das SAR installiert ist, zu berücksichtigen. Daher ist es notwendig, die Bilder zu korrelieren, d.h. die Echos zu identifizieren unter Berücksichtigung der Bewegung des mit einer bestimmten Geschwindigkeit fliegenden Flugzeugs und der Tatsache, daß die Echos das SAR nicht in einem Ruhezustand sondern in einem fortlaufend bewegten Zustand erreichen. Daher muß hinsichtlich der Bildverarbeitung eine zweidimensionale Korrelation durchgeführt werden. Die von den verschiedenen Echopunkten kommenden Rohdaten können in Entfernungsrichtung komprimiert werden, um eine Bildentfernungslinie zu erhalten. Die Azimuth-Kompression jedoch muß gleichzeitig für alle Auflösungszellen, genannt Entfernungsfenster, durchgeführt werden, um das gewünschte Bild in Echtzeit zu erhalten.

Deshalb ist es notwendig, einen Echtzeit-Korrelator zu verwenden. Wenn ein empfangenes Echo am Eingang eines derartigen Korrelators ankommt, d.h. wenn eine Entfernungslinie dargestellt wird, wird sie in Entfernungsrichtung korreliert und in der ersten Zeile eines SAR-Speichers abgelegt. Die später korrelierten Entfernungslinien verschieben die vorhergehenden Daten in die nachfolgenden Zeilen, bis alle Spalten des Speichers gefüllt sind.

Auf die Daten kann nun von den Spalten aus zugegriffen werden, von denen jede eine Auflösungszelle darstellt. Dann wird die Azimuth-Korrelation jedes Entfernungsfensters durchgeführt, um eine Bildentfernungslinie am Ausgang zu erhalten. Daher erscheint für jede korrelierte Entfernungslinie, die dem Korrelator zugeführt wird, eine Bildentfernungslinie am Ausgang.

An die Echtzeit-Verarbeitung ist daher grundsätzlich die Forderung zu stellen, daß alle Azimuth-Daten für jedes Entfernungsfenster gespeichert werden können und eine Vielkanal-Korrelation längs des Azimuths durchgeführt werden kann. Es gibt heute insbesondere keinen billigen Korrelator, der diese Forderungen erfüllt und eine geringe Baugröße besitzt.

Ein von P. Kellman in "Time-integrating optical signal Processing", Ph. D. Thesis, Stanford University, Stanford CA (1979) vorgeschlagener Korrelator führt nur eindimensionale Korrelationen durch, ist aus diskreten Bauteilen aufgebaut und verwendet ein Filtersystem, das aus einem optischen System mit ebenfalls diskreten Bauteilen besteht. Dieser Korrelator ist einer von vielen akustisch-optischen Korrelatoren und nicht für Radardaten ausgelegt.

Es ist daher Aufgabe der Erfindung, ein wirtschaftliches Korrelatorsystem anzugeben, das eine große Zuverlässigkeit und Flexibilität bei der Verarbeitung mit geringen raumlichen Abmessungen verbindet.

Diese Aufgabe wird durch ein Korrelatorsystem gemäß Anspruch 1 gelöst. Vorteilhafte Weiterbildungen sind in den Unteransprüchen enthalten.

Die Erfindung wird nachstehend anhand eines Ausführungsbeispiels erläutert. Es zeigen

Fig. 1 ein Blockschaltbild eines erfindungsgemäßen Korrelatorsystems mit einer Korrelatoreinheit und mit CCD's (ladungsgekoppelten Schaltkreisen);

Fig. 2 schematisch einen Interdigitalwandler für eine Braggzelle für die Korrelatoreinheit gemäß Fig. 1.

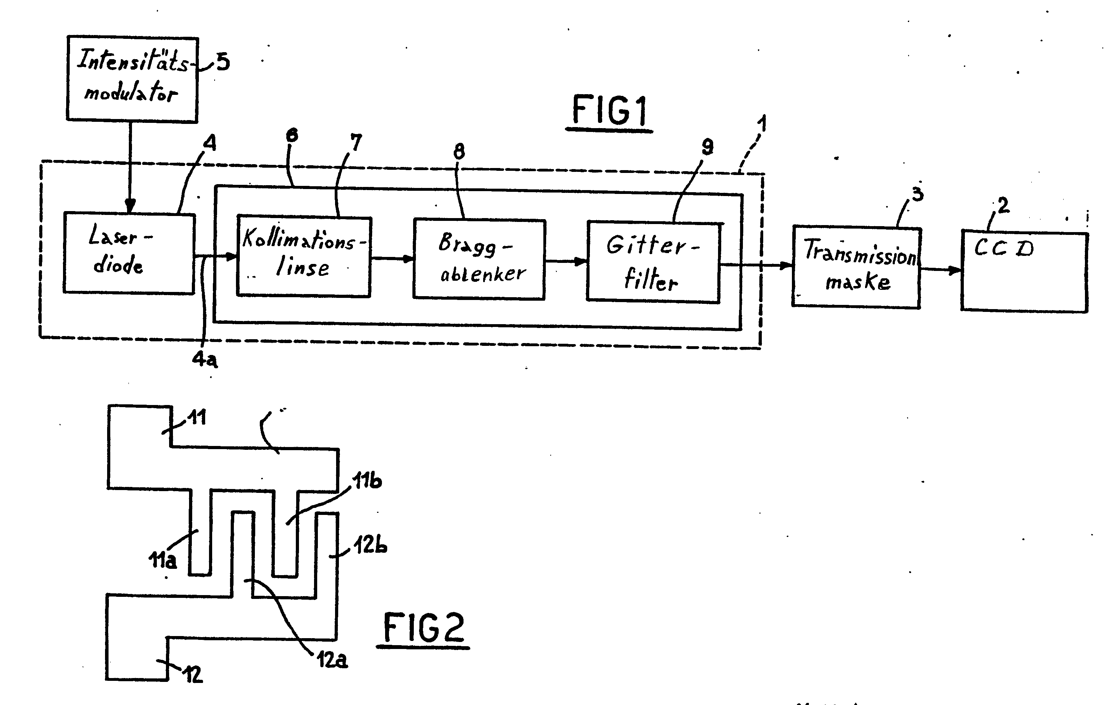

In Fig. 1 ist die Korrelatoreinheit 1 von einer gestrichelten Linie umgeben. Sie ist durch eine optische Transmissionsmaske 3 mit CCD's 2 verbunden.

Die Korrelatoreinheit 1 enthält eine Lichtquelle 4, beispielsweise eine Laserdiode, die einen Lichtstrahl 4a aussendet. Die Lichtquelle ist durch einen Intensitätsmodulator 5 mit einem Referenzsignal intensitätsmoduliert. Ein Wellenleiter 6 führt den von der Lichtquelle 4 ausgesendeten Lichtstrahl. Wegen seiner großen elektro-optischen und akustisch-optischen Koeffizienten und weil daraus Wellenleiter sehr hoher Qualität leicht herstellbar sind, besteht der Wellenleiter 6 aus einem Lithium-Niobat-Kristall, der z-Schnitt-orientiert ist, damit er keine Oberflächenbeschädigung während der Herstellung erleidet. Er wird durch das Protonenaustauschverfahren mit in Benzoesäure gelöstem Lithium-Benzoat hergestellt, ein einfaches Verfahren, bei dem keine wesentliche Verschlechterung der elektro-optischen Eigenschaften auftritt.

Der Wellenleiter 6 führt den Lichtstrahl, der auf eine Kollimationslinse 7 trifft, die durch eine geodätische Linse gebildet ist, die durch eine in zwei Zonen, eine innere und eine äußere, aufgeteilte asphärische Oberfläche realisiert ist, die direkt durch eine Vertiefung im Wellenleitersubstrat gebildet wird, die vor der Herstellung der wellenleitenden Schicht erzeugt wurde. Sie umfaßt die gesamte Länge des Wellenleiters, da die benötigte Laserstrahlbreite groß ist.

Der von der Kollimationslinse 7 kommende Lichtstrahl trifft auf einen Braggablenker 8, der aus einem sogenannten Interdigitalwandler besteht, der durch zwei gezähnte Elektroden realisiert ist, deren Zähne sich abwechseln und die sich strukturell im Kristall des Wellenleiters 6 befinden. Das Signal vom Braggablenker 8 tritt durch ein Gitterfilter 9.

Fig. 2 zeigt schematisch den Interdigitalwandler für die Braggzelle, der aus zwei gezähnten Elektroden 11 und 12 besteht, die mit Zähnen 11a, 11b und 12a, 12b versehen sind.

Wie oben erläutert, wird das Problem, eine Mehrkanal-Korrelation und eine relative Speicherung durchzuführen, durch die erfindungsgemäße Anordnung einer zweidimensionalen Gruppe von CCD's 2 gelöst, die über eine optische Transmissionsmaske 3 an die Korrelatoreinheit 1 angeschlossen ist.

Die Funktion der Korrelatoreinheit ist nachstehend beschrieben.

Der Lichtstrahl 4a ist durch den Modulator 5 intensitätsmoduliert und beleuchtet die Gruppe von CCD's durch die Maske 3. Die CCD's werden so betrieben, daß die in jeder Zelle gesammelte Ladung entlang der Kette synchron zum abgetasteten Signal verschoben wird. Die Lichtverteilung wird durch die Transmissionsmaske 3 nach ihrer Bündelung längs der Vertikalen auf die CCD's 2 abgebildet. Jeder Spalte der CCD's entspricht ein Entfernungsfenster, und der dazugehörige Teil der Maske trägt die zu dieser Spalte gehörende Korrelationsfunktion, so daß jede Spalte auf dieselbe Weise und alle Entfernungsfenster gleichzeitig bearbeitet werden können. Die Abstandskompression wird mit der akustisch-optischen Korrelatoreinheit 1 erzielt. Die Kombination der Korrelatoreinheit 1 mit den CCD's 2 stellt praktisch einen Echtzeit-Prozessor dar.

Der Lichtstrahl 4a kann sich in der Wellenleiterebene des Wellenleiters 6 natürlich ausbreiten, wird durch die Kollimationslinse 7 gebündelt und trifft auf den Braggablenker 8 auf, der eine Beugung verursacht. Ein Teil des Lichtstrahls wird nicht gebeugt. Der gebeugte Teil des Lichtstrahls trägt die Information und muß daher den CCD-Photodetektor 2 erreichen, während der andere Teil durch das Gitterfilter 9 abgelenkt und von der CCD-Matrix 2 ferngehalten wird, so daß er dort nicht auftreffen kann.

Dieser zweite Strahl kann sich senkrecht entlang der Kante am Ausgang des Wellenleiters 6 ausbreiten, und während der folgenden Wegstrecke zur Abbildung der horizontalen Lichtverteilung vom Wellenleiterausgang zur Referenzebene des CCD 2 verwendet werden.

Das Gitterfilter 9 lenkt den ungebeugten Strahl ab und läßt den gebeugten Strahl ungestört hindurch. Eine Gruppe von Photodetektoren, die durch die CCD's gebildet ist, wirkt auch als ein Schieberegisterspeicher.

Das Gitterfilter 9 besteht aus einer periodischen Anordnung von Rillen, die auf die Wellenleiteroberfläche 6 geätzt sind, mit einem rechtwinkligen Querschnitt.

Die Kollimationslinse 7 arbeitet mit einer weiteren, in der Figur nicht dargestellten Linse zusammen. Sie bilden ein zylindrisches, achromatisches Doublett, dessen Beugung richtig begrenzt ist.

Der Braggablenker 8, der durch einen Interdigitalwandler realisiert ist, muß eine bestimmte Braggzellen-Mittenfrequenz selektieren. Die Mittenfrequenz muß hoch genug sein, um die erforderliche Bandbreite zu besitzen, die von der Anzahl der Elektrodenpaare und der Länge der Elektroden 11, 12 abhängt. Außerdem darf die Grundfrequenz nicht sehr hoch sein, um mit dem Problem der Dämpfung von akustischen Oberflächenwellen fertig zu werden, muß aber zugleich so nahe wie möglich bei der Frequenz liegen, bei der der akustisch-optische Kopplungskoeffizient seinen größten Wert annimmt.

Normalerweise ist die Anzahl der Elektrodenpaare sehr klein, beispielsweise gleich zwei, um eine große akustische Bandbreite des Wandlers zu erhalten.

Die oben beschriebene akustisch-optische Korrelatoreinheit 1 erlaubt in Verbindung mit dem zweidimensionalen CCD-Feld 2 eine Echtzeit-Datenverarbeitung. Die CCD-Matrix wird gleichzeitig als Photodetektor und Prozessorelement verwendet. Auf dem Substrat des Wellenleiters sind der Wellenleiter 6, die Kollimationslinse 7, der Braggablenker 8 und das Gitterfilter 9 integriert. Daher ist diese Anordnung aufgrund ihrer kleinen Abmessungen, ihrer kleinen Leistungsaufnahme und ihrem geringen Gewicht für Anwendungen an Bord eines Flugzeugs geeignet. Ferner bewirkt die Integration eine hohe Zuverlässigkeit und eine Reduzierung der Kosten. Durch die Kopplung der CCD-Matrix über die Transmissionsmaske wird die Vielkanalkorrelation in Azimuth-Richtung ermöglicht, und durch die Möglichkeit, die gesamten Azimuthdaten für jedes Entfernungsfenster zu speichern, wird die Echtzeitverarbeitung ermöglicht.

## Ansprüche

1. Wellenleiterkorrelatorsystem, insbesondere für die Echtzeit-Verarbeitung von Radardaten, **dadurch gekennzeichnet,** daß es eine Korrelatoreinheit (1) enthält, die, hintereinander angeordnet, eine Lichtquelle (4), einen Wellenleiter (6), eine Kollimationslinse (7), einen Braggablenker (8) und ein Filter (9) aufweist und eine CCD-Einheit (2) (ladungsgekoppelte Schaltungseinheit) enthält, die mittels einer Transmissionsmaske (3) mit dem Filter (9) gekoppelt ist.

2. Wellenleiterkorrelatorsystem nach Anspruch 1, dadurch gekennzeichnet, daß die Korrelatoreinheit (1) als ein integriert-optisches Bauelement auf einem gemeinsamem Substrat realisiert ist.

3. Wellenleiterkorrelatorsystem nach Anspruch 1 oder 2, dadurch gekennzeichnet, daß die Lichtquelle (4) aus einer intensitätsmodulierten Laserdiode besteht.

4. Wellenleiterkorrelatorsystem nach Anspruch 1 oder 2, dadurch gekennzeichnet, daß die Kollimationslinse (7) eine in zwei Zonen aufgeteilte asphärische Oberfläche aufweist.

5. Wellenleiterkorrelatorsystem nach Anspruch 1 oder 2, dadurch gekennzeichnet, daß der Braggablenker (8) einen Interdigitalwandler aufweist.

6. Wellenleiterkorrelatorsystem nach Anspruch 1 oder 2, dadurch gekennzeichnet, daß das Filter (9) ein Gitterfilter ist, das auf die Oberfläche des Wellenleiters (6) aufgebracht ist.

FIG1

Intensitäts-modulator 5

Laser-diode 4

4a

Kollimations-linse 6 7

Bragg-ablenker 8

Gitter-filter 9

1

Transmission maske 3

CCD 2

FIG2

11

11b

11a

12b

12a

12

EP 0 380 044 A1

M. N. Armenise  1-1-3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | IEE PROCEEDINGS SECTION A à I, Band 133, Nr. 1, Februar 1986, Teil J, Seiten 7-25, Stevenage, Herts, GB; C.D. DANIEL: "Concepts and techniques for real-time optical synthetic aperture radar data processing" * Zusammenfassung; Absatz 2: "Principles"; Absatz 5: "TDI optical correlator"; Absatz 6: "Azimuth processing"; Absatz 7: "Range correlator" * --- | 1,3,4 | G 01 S 13/90 |
| Y | IDEM --- | 2,5 | |
| Y | US-A-4 468 084 (HUTCHESON et al.) * Insgesamt * --- | 1-5 | |
| X | APPLIED OPTICS, Band 27, Nr. 9, 1. Mai 1988, Seiten 1786-1796, Optical Society of America, New York, NY, US; M. HANEY et al.: "Real-time programmable acoustooptic synthetic aperture radar processor" * Zusammenfassung; Absatz 1: "Introduction"; Absatz IV: "Time and space integrating approach" * --- -/- | 1,3 | RECHERCHIERTE SACHGEBIETE (Int. Cl.5) G 01 S G 06 E |

Der vorliegende Recherchenbericht wurde für alle Patentansprüche erstellt

| Recherchenort | Abschlußdatum der Recherche | Prüfer |
|---|---|---|
| DEN HAAG | 04-05-1990 | BLONDEL F.J.M.L.J. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | OPTICAL ENGINEERING, Band 21, Nr. 5, September-Oktober 1982, Seiten 822-828, Society of Photo-Optical Instrumentation Engineers, Bellingham, Washington, US; D. PSALTIS et al.: "Real-time optical synthetic aperture radar (SAR) processor" * Zusammenfassung; Absatz 1: "Introduction"; Absatz 2: "SAR signals"; Absatz 3: "Acousto optic CCD SAR processor" * --- | 1,3 | |
| A | US-A-4 567 569 (CAULFIELD et al.) * Insgesamt * ----- | 1 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 04-05-1990 | BLONDEL F.J.M.L.J. |